# EUROPÄISCHE PATENTANMELDUNG

(11) **EP 1 988 106 A1**
(43) Veröffentlichungstag der Anmeldung: **05.11.2008**
(21) Anmeldenummer: 08155503.9
(22) Anmeldetag: 30.04.2008
(51) Int. Cl.: C08F 255/02, C09D 151/06

(54) **Flammwidrig ausgerüstete halogenfreie Polyolefin-Plastisole, Verfahren zu deren Herstellung und ihre Verwendung zur Herstellung von Folien und Beschichtungen**

(30) Priorität: 30.04.2007 DE 102007020640
(71) Anmelder: Institut für Kunststofftechnologies und -recycling e.V., 06369 Weißandt-Götzau (DE)
(72) Erfinder: Seifert, Bernhard, 06188 Braschwitz (DE); Schadewald, Anke, 06369 Riesdorf (DE); Rapthel, André, 06120 Halle (DE); Arnold, Prof. Dr. Manfred, 06667 Leißling (DE)
(74) Vertreter: Wablat, Wolfgang

(57) **Zusammenfassung**

Flammwidrig ausgerüstete halogenfreie Polyolefin-Plastisole und Verfahren zu ihrer Herstellung durch den Zusatz halogenfreier phosphorhaltiger Reaktivverdünner auf der Basis von Phosphinsäurederivaten zu Polyolefin-Plastisolen und deren Verwendung zur Herstellung von Folien und Beschichtungen.

## Beschreibung

Die vorliegende Erfindung betrifft ein neues Verfahren zur Herstellung flammwidrig ausgerüsteter Polyolefin-Plastisole durch den Zusatz halogenfreier phosphorhaltiger Reaktivverdünner auf der Basis von Phosphinsäurederivaten zu nicht flammwidrigen Polyolefin-Plastisolen und deren Verwendung zur Herstellung von Folien und Beschichtungen.

Polyolefin-Plastisole werden in DE 19537527 C2, DE 10048055 A1, US 6756450 B2 und WO 02/10235 A1 beschrieben.

Polyolefin-Plastisole sind halogenfreie Plastisole auf Polyolefin-Basis. Die Plastisole bestehen aus einem feindispergierten Polyolefin, einem Dispersionsmittel, zusammengesetzt aus polymerisierbaren und copolymerisierbaren Monomeren, und/oder Oligomeren und/oder Prepolymeren sowie gegebenenfalls flüssigen Weichmachern und einem für die gewünschte Polymerisation und Copolymerisation geeigneten Initiator-System. Bei Erwärmen auf höhere Temperaturen gelieren diese Plastisole. Durch die Gewährleistung von vielfältigen Eigenschaftskombinationen sind diese Plastisole für viele Anwendungen geeignet und stellen eine vorteilhafte Alternative zu derzeit verwendeten Plastisolen, insbesondere auf PVC-Basis, dar.

Eine nachteilige Eigenschaft dieser gelierten Polyolefin-Plastisole ist die besonders leichte Brennbarkeit, wodurch der Einsatz in verschiedenen Bereichen, wie beispielsweise in der Baubranche, eingeschränkt wird.

Der Einsatz von phosphororganischen Verbindungen für die flammwidrige Ausrüstung von Polyolefin-Plastisolen ist nicht bekannt.

Die Aufgabe der vorliegenden Erfindung ist somit die Bereitstellung von verbesserten und vielseitiger einsetzbaren halogenfreien flammwidrig ausgerüsteten Polyolefin-Plastisolen, die den vorgenannten Nachteil nicht aufweisen, sowie die Bereitstellung eines Verfahrens zu deren Herstellung.

Erfindungsgemäß wird die Aufgabe durch den Zusatz halogenfreier phosphorhaltiger Reaktivverdünner zu nicht flammwidrigen Polyolefin-Plastisolen gemäß den Merkmalen des Patentanspruchs 1, sowie durch ein Verfahren gemäß den Merkmalen des Patentanspruchs 7, gelöst. Vorteilhafte Weiterbildungen der Erfindung ergeben sich aus den Unteransprüchen.

Als erfindungsgemäße phosphorhaltige Reaktivverdünner werden dabei Phosphinsäurederivate der Formel I, 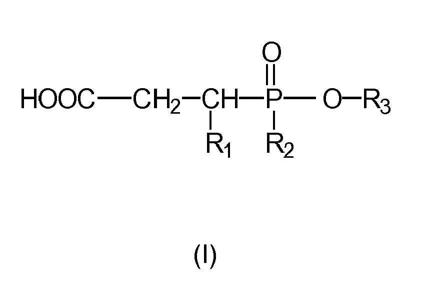 in der R₁ ein Wasserstoffatom oder einen Methylrest, R₂ geradlinige oder verzweigte Alkyl-, Cycloalkyl-, Aryl- oder Alkylarylgruppen mit 1 bis 18 C-Atomen, R₃ R₄OOC-C(R₁)=CH₂, CH₂CH=C(CH₃)₂ oder C(CH₃)₃ und R₄ geradkettige oder verweigte Alkylengruppen mit 2 bis 18 C-Atomen bedeuten, eingesetzt.

Bevorzugt bedeutet R₁ ein Wasserstoffatom.

Bevorzugt bedeutet R₂ eine geradlinige oder verzweigte Alkyl-, Cycloalkyl-, Arylgruppe mit 1 bis 6 C-Atomen, besonders bevorzugt bedeutet R₂ ein Methyl- oder Ethylrest.

Bevorzugt bedeutet R₄ eine geradlinige oder verzeigte Alkylengruppe mit 2 bis 6 C-Atomen, besonders bevorzugt bedeutet R₄ ein Ethylenrest.

Allgemein wird zur Synthese der erfindungsgemäßen Reaktivverdünner ein Phosphinsäureanhydrid-Derivat der allgemeinen Formel II eingesetzt, 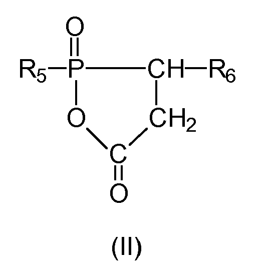 in der R₅ eine geradlinige oder verzweigte Alkyl-, Cycloalkyl-, Aryl- oder Alkylarylgruppe mit 1 bis 18 C-Atomen und R₆ ein Wasserstoffatom oder ein Methylrest bedeuten.

Bevorzugt bedeutet R₅ eine geradlinige oder verzweigte Alkyl-, Cycloalkyl-, Aryl- oder Alkylarylgruppe mit 1 bis 6 C-Atomen, besonders bevorzugt bedeutet R₅ einen Methyl- oder Ethylrest, insbesondere einen Methylrest.

Bevorzugt bedeutet R₆ ein Wasserstoffatom.

Besonders bevorzugt wird für die Synthese der reaktiven Verdünner 2-Methyl-2,5-dioxo-1-oxa-2-phospholan eingesetzt.

Bevorzugt wird das Phosphinsäureanhydrid-Derivat mit ungesättigten Komponenten in molaren Mischungsverhältnissen von 60 zu 40 bis 40 zu 60 von Phosphin- zu Hydroxykomponente, bevorzugt von 55 zu 45 bis 45 zu 55 und besonders bevorzugt äquimolar, umgesetzt.

Als weitere Komponenten werden zur Synthese der erfindungsgemäßen reaktiven Verdünner mindestens ein ungesättigter Hydroxyester der allgemeinen Formel III eingesetzt, 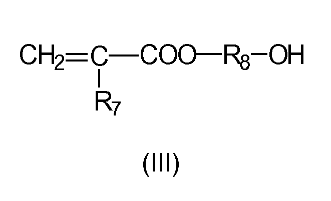 in der R₇ ein Wasserstoffatom oder einen Methylrest und R₈ eine geradlinig oder verzweigte Alkylengruppe mit 2 bis 18 C-Atomen bedeuten oder verzweigte Alkohole verwendet, wobei bei mehreren Hydroxyestern und verzweigten Alkoholen diese sowohl einzeln als auch unterschiedliche Mischungen dieser Komponenten eingesetzt werden können.

Bevorzug bedeutet R₇ ein Wasserstoffatom, wodurch eine erhöhte Reaktivität erreicht wird.

Bevorzugt bedeutet R₈ eine geradlinige oder verzweigte Alkylengruppe mit 2 bis 6 C-Atomen.

Bevorzugt werden zur Synthese der reaktiven Verdünner 2-Hydroxyethylacrylat, 2-Hydroxyethylmethacrylat, 3-Hydroxypropylacrylat, 3-Hydroxypropylmethacrylat, 1,4-Butandiolmonoacrylat, 3-Methyl-2-buten-1-ol oder tert. Butanol verwendet.

Die Herstellung der phosphorhaltigen Reaktivverdünner kann in üblicherweise für chemische Synthesen genutzten Reaktionssystemen, wie z.B. Rührreaktoren, durchgeführt werden, wobei man die Reaktionskomponenten bei Temperaturen zwischen 20 und 100 °C, vorteilhafterweise zwischen 40 und 70 °C, besonders bevorzugt zwischen 50 und 55 °C, zur Umsetzung bringt.

Durch den Zusatz von Katalysatoren aus der Gruppe der Säuren, vorzugsweise p-Toluolsulfonsäure, kann die Reaktion beschleunigt werden.

Die Reaktionsdauer kann je nach Reaktionstemperatur 15 bis 180 Minuten, bei Temperaturen zwischen 50 und 55 °C bevorzugt 60 bis 80 Minuten, betragen

Es werden halogenfreie Plastisole, enthaltend ein feindispergiertes Polyolefin, ein Dispersionsmittel, zusammengesetzt aus polymerisierbaren und copolymerisierbaren Monomeren, und/oder Oligomeren und/oder Prepolymeren sowie gegebenenfalls flüssigen Weichmachern und ein für die gewünschte Polymerisation und Copolymerisation geeigneten Initiator-System verwendet.

Die Reaktionsführung kann derart erfolgen, dass die Hydroxykomponente bzw. deren Mischungen, gegebenenfalls im Gemisch mit einem inerten Lösungsmittel aus der Gruppe der Ketone, aliphatischer und cyclischer Ether oder Aromaten, mit einem Mengenanteil von 10 bis 100%, bezogen auf die Reaktionskomponenten, im Reaktor vorgelegt werden und das Phospholanderivat während der Reaktion stufenweise oder kontinuierlich zudosiert wird.

Bei dem erfindungsgemäßen Verfahren werden die erfindungsgemäßen phosphorhaltigen Reaktivverdünner oder Mischungen dieser, in einer Menge von 1 bis 50 Gewichts-%, vorzugsweise 3 bis 20 Gewichts-%, besonders bevorzugt 5 Gewichts-% den eingangs beschriebenen halogenfreien Polyolefin-Plastisolen zugesetzt, wodurch der Phosphorgehalt der Plastisole 0,1 bis 5 Gewichts-%, vorzugsweise 0,3 bis 2 Gewichts-%, besonders bevorzugt 0,5 Gewichts-% beträgt.

Die Polyolefin-Plastisole werden in einem Verfahren hergestellt, bei welchem mindestens ein phosphorhaltiger Reaktivverdünner nach Formel I mit feindispergiertem Polyolefin, einem Dispersionsmittel, zusammengesetzt aus polymerisierbaren und copolymerisierbaren Monomeren, und/oder Oligomeren und/oder Prepolymeren sowie gegebenenfalls flüssigen Weichmachern und einem für die gewünschte Polymerisation und Copolymerisation geeigneten Initiator-System zusammengegeben wird. Gegebenenfalls werden weitere Additive zugegeben. Die Synthese der phosphorhaltigen Reaktivverdünner erfolgt wie oben beschrieben. Insbesondere werden die Polyolefin-Plastisole in geeigneten Knet- und Mischaggregaten in einem dreistufigen Verfahren hergestellt.
In der ersten Prozessstufe wird das in grobstückiger Form vorliegende Polyolefinmaterial bei einer Temperatur wenigstens 10 °C über der Schmelztemperatur des Polyolefins mit 20 bis 60 Teilen des Dispersionsmittels, bezogen auf 100 Teile Polyolefin, homogenisiert.

Unter fortwährendem intensiven Mischen wird anschließend auf eine Temperatur von 5 bis 20 °C unter die Schmelztemperatur des Polyolefins abgekühlt und weitere 5 bis 70 Teile, bezogen auf 100 Teile Polyolefin, eines Dispersionsmittels zugesetzt, wobei eine feinteilige Dispersion des Polyolefins in der Mischung der Dispersionsmittelkomponenten entsteht.
In einer dritten Verfahrensstufe wird die feinteilige Polyolefindispersion mit Partikeldurchmessern kleiner 50 µm bei einer Temperatur unter 60 °C unter schrittweiser Zugabe von weiteren 5 bis 40 Teilen Dispersionsmittelkomponenten, bezogen auf 100 Teile Polyolefin, einem für die reaktive Gelierung geeigneten Initiator-System sowie gegebenenfalls weiteren Additiven, wie Stabilisatoren, Farb- und Füllstoffen, zu einer pastenförmigen Masse mit dem gewünschten Fließverhalten verarbeitet. Die Zugabe und Einarbeitung des mindestens einen phosphorhaltigen Reaktivverdünners nach Formel I erfolgt in einer der drei Stufen. Vorzugsweise erfolgt die Zugabe und Einarbeitung des erfindungsgemäßen mindestens einen phosphorhaltigen Reaktivverdünners (Flammschutzkomponente) oder eines Gemisches verschiedener Reaktivverdünner (Flammschutzkomponenten) in der dritten Verfahrensstufe vor Zugabe des letzten Anteils der Dispersionsmittelmittelkomponenten zur Einstellung der Endviskosität der erfindungsgemäßen Polyolefin-Plastisole.

Bevorzugt umfassen die erfindungsgemäßen Polyolefin-Plastisole 10 bis 70 Gewichts-% Polyolefin und 30 bis 90 Gewichts-% Dispersionsmittel. Bevorzugte Komponenten der feindispergierten Polyolefine in den erfindungsgemäß ausgerüsteten Plastisolen sind Homo-, Co- und Terpolymere auf der Basis von Ethylen und Propylen mit 1-Olefinen der C-Zahlen 2 bis 8 sowie Acrylsäure und Methacrylsäure und ihren Estern mit C-Zahlen der Esteralkylkette von 1 bis 6, die ggf. auch in Form mehrkomponentiger Blends, enthalten sind.

Als polymerisierbare Dispergatoren enthalten die erfindungsgemäß ausgerüsteten Plastisole bevorzugt Mischungen aus Acrylaten und Methacrylaten mit teilweise funktionalisierten Alkylketten mit C-Zahlen von 1 bis 12 sowie Acrylat- und Methacrylat- funktionalisierte Oligomere von Polyethern, Polyestern und Polyurethanen sowie Dienoligomere.

Hinsichtlich der insgesamt einsetzbaren Polyolefine, Dispergatoren (Dispergiermittel, Dispersionsmittel), Initiatoren, Stabilisatoren sowie Farb- und Füllstoffen wird die Schrift EP 1332165 B1 in Bezug genommen. Ebenso wird für Details des dreistufigen Herstellungsverfahrens Bezug auf das Dokument EP 1332165 B1 genommen.

Die Erfindung betrifft ebenfalls die Verwendung der erfindungsgemäß flammwidrig ausgerüsteten Polyolefin-Plastisole zur Herstellung von flammwidrigen Folien und Beschichtungen.

Zugesetzte phosphorhaltige Reaktivverdünner copolymerisieren bei der Gelierung der Polyolefin-Plastisole mit den Dispersionsmitteln oder zerfallen unter Olefinabspaltung in feinteilige, flammwidrig wirkende Methyl-2-carboxyethylphosphinsäure.

Die Prüfung des Brandverhaltens erfolgte nach der DIN 4102 B2.
Nachfolgend wird die Erfindung durch Beispiele erläutert.

### Beispiele

In den Beispielen wurden folgende Stoffe eingesetzt:
2-Methyl-2,5-dioxo-1-oxa-2-phospholan (Clariant AG), phosphorhaltiges Säureanhydrid mit einem Phosphorgehalt von 23 %;
2-Hydroxyethylacrylat (Degussa), ungesättigter Hydroxylester;
3-Methyl-2-buten-1-ol (BASF), ungesättigter Alkohol;
tert. Butanol (Degussa);
Polyolefin-Plastisol (enthält Dicumylperoxid als Initiator)

### Beispiel 1

In einem 100 ml Dreihalskolben mit Rührer und Thermometer werden 30,0 g pulverisiertes 2-Methyl-2,5-dioxo-1-oxa-2-phospholan und 29,1 g 2-Hydroxyethylmethacrylat 60 Minuten auf 50 °C erhitzt und danach abgekühlt. Es werden 59,1 g eines farblosen, leicht viskosen phosphorhaltigen Reaktivverdünners erhalten. Der Phosphorgehalt beträgt 11,7 %. Darauf folgend werden 100 g Polyolefin-Plastisol mit 4,5 g Reaktivverdünner gemischt und das Plastisol bei 190 °C zu Folien mit einer Dicke von 150 µm geliert. Die Prüfung des Brandverhaltens nach DIN 4102 B2 ergab, dass die Folien jeweils 3 s brennen und dann verlöschen. Die Flammspitze erreichte dabei nicht die obere Meßmarke. Es trat kein Abtropfen auf.

### Beispiel 2

In einem 100 ml Dreihalskolben mit Rührer und Thermometer werden 30,0 g pulverisiertes 2-Methyl-2,5-dioxo-1-oxa-2-phospholan in 19,3 g 3-Methyl-2-buten-1-ol innerhalb 45 Minuten bei 25 °C zur Reaktion gebracht. Es werden 49,3 g eines farblosen, leicht viskosen phosphorhaltigen Reaktivverdünners erhalten. Der Phosphorgehalt beträgt 14,1 %. Darauf folgend werden 100 g Polyolefin-Plastisol mit 3,8 g Reaktivverdünner gemischt und das Plastisol bei 190 °C zu Folien mit einer Dicke von 200 µm geliert. Die Prüfung des Brandverhaltens nach DIN 4102 B2 ergab, dass die Folien jeweils 3 s brennen und dann verlöschen. Die Flammspitze erreicht dabei nicht die obere Meßmarke. Es trat kein brennendes Abtropfen auf.

### Beispiel 3

In einem 100 ml Dreihalskolben mit Rührer und Thermometer werden 30,0 g pulverisiertes 2-Methyl-2,5-dioxo-1-oxa-2-phospholan und 16,6 g tert. Butanol 20 Minuten auf 70 °C erhitzt und danach abgekühlt. Es werden 46,6 g eines farblosen, leicht viskosen phosphorhaltigen Reaktivverdünners erhalten. Der Phosphorgehalt beträgt 14,9 %. Darauf folgend werden 100 g Polyolefin-Plastisol mit 5,4 g Reaktivverdünner gemischt und das Plastisol bei 190 °C zu Folien mit einer Dicke von 300 µm geliert. Die Prüfung des Brandverhaltens nach DIN 4102 B2 ergab, dass die Folien jeweils 7 s brennen und dann verlöschen. Die Flammspitze erreicht dabei nicht die obere Meßmarke. Es trat kein brennendes Abtropfen auf.

### Vergleichsbeispiel

Das Polyolefin-Plastisol wird bei 190 °C zu Folien mit Dicken von 150 µm bis 300 µm geliert. Bei der Prüfung des Brandverhaltens der Folien nach DIN 4102 B2 erreichte die Flammenspitze in einer Zeit von <10 s die obere Meßmarke. Es trat brennendes Abtropfen auf.

## Patentansprüche

1. Flammwidrig ausgerüstete halogenfreie Polyolefin-Plastisole, **dadurch gekennzeichnet, dass** nichtflammwidrigen Polyolefin-Plastisolen, enthaltend ein feindispergiertes Polyolefin, ein Dispersionsmittel, zusammengesetzt aus polymerisierbaren und copolymerisierbaren Monomeren, und/oder Oligomeren und/oder Prepolymeren sowie gegebenenfalls flüssige Weichmacher und ein für die gewünschte Polymerisation und Copolymerisation geeignetes Initiator-System, phosphorhaltige Reaktivverdünner der Struktur nach Formel I, 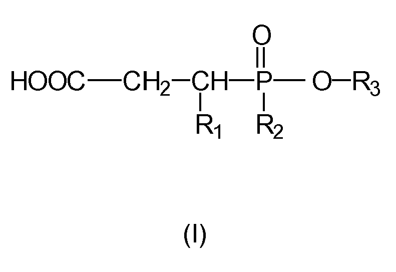 in der R₁ ein Wasserstoffatom oder einen Methylrest, R₂ geradlinige oder verzweigte Alkyl-, Cycloalkyl-, Aryl- oder Alkylarylgruppen mit 1 bis 18 C-Atomen, R₃ R₄OO-C(R₁)=CH₂, CH₂CH=C(CH₃)₂ oder C(CH₃)₃ und R₄ eine geradlinige oder verzweigte Alkylengruppe mit 2 bis 18 C-Atomen bedeuten, zugesetzt werden.

2. Flammwidrig ausgerüstete halogenfreie Polyolefin-Plastisole nach Anspruch 1, **dadurch gekennzeichnet, dass** R₁ in der Struktur der phosphorhaltigen Reaktivverdünner für ein Wasserstoffatom steht.

3. Flammwidrig ausgerüstete halogenfreie Polyolefin-Plastisole nach mindestens einem der Ansprüche 1 bis 2, **dadurch gekennzeichnet, dass** R₂ in der Struktur der phosphorhaltigen Reaktionsverdünner eine geradlinige oder verzweigte Alkyl-, Cycloalkyl-, Aryl- oder Alkylarylgruppe mit 1 bis 6 C-Atomen bedeutet.

4. Flammwidrig ausgerüstete halogenfreie Polyolefin-Plastisole nach mindestens einem der Ansprüche 1 bis 3, **dadurch gekennzeichnet, dass** R₂ in der Struktur der phosphorhaltigen Reaktivverdünner einen Methyl- oder Ethylrest bedeutet.

5. Flammwidrig ausgerüstete halogenfreie Polyolefin-Plastisole nach einem oder mehreren der Ansprüche 1 bis 4, **dadurch gekennzeichnet, dass** in der Struktur der phosphorhaltigen Reaktivverdünner R₄ eine geradlinige oder verzweigte Alkylengruppe mit 2 bis 6 C-Atomen bedeutet.

6. Verfahren zur Herstellung flammwidrig ausgerüsteter halogenfreier Polyolefin-Plastisole nach mindestens einem der Ansprüche 1 bis 5, **dadurch gekennzeichnet, dass** mindestens ein phosphorhaltiger Reaktivverdünner nach Formel I mit feindispergiertem Polyolefin, einem Dispersionsmittel, zusammengesetzt aus polymerisierbaren und copolymerisierbaren Monomeren, und/oder Oligomeren und/oder Prepolymeren sowie gegebenenfalls flüssigen Weichmachern und einem für die gewünschte Polymerisation und Copolymerisation geeigneten Initiator-System zusammengegeben wird, wobei zur Synthese der phosphorhaltigen Reaktivverdünner nach Formel I, 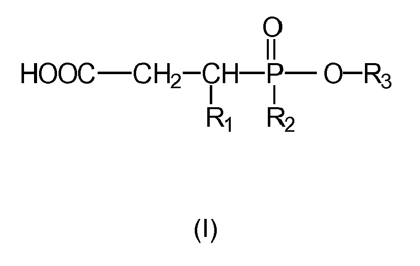 in der R₁ ein Wasserstoffatom oder einen Methylrest, R₂ geradlinige oder verzweigte Alkyl-, Cycloalkyl-, Aryl- oder Alkylarylgruppen mit 1 bis 18 C-Atomen, R₃ R₄OOC-C(R₁)=CH₂, CH₂CH=C(CH₃)₂ oder C(CH₃)₃ und R₄ Alkylengruppen mit 2 bis 18 C-Atomen bedeuten, ein Phosphinsäureanhydrid der allgemeinen Formel II, 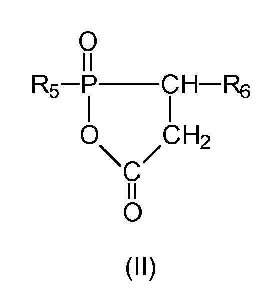 in der R₅ eine geradlinige oder verzweigte Alkyl-, Cycloalkyl-, Aryl- oder Alkylarylgruppe mit 1 bis 18 C-Atomen und R₆ ein Wasserstoffatom oder einen Methylrest bedeuten, mit mindestens einem ungesättigten Hydroxyester der allgemeinen Formel III, 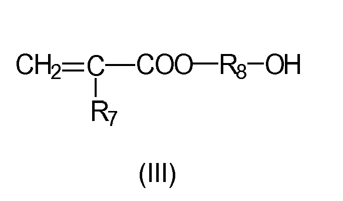 in der R₇ ein Wasserstoffatom oder einen Methylrest und R₈ eine geradlinige oder verzweigte Alkylengruppe mit 2 bis 18 C-Atomen bedeuten oder einem verzweigten Alkohol, wobei bei mehreren Hydroxyestern und verzweigten Alkoholen diese sowohl einzeln als auch unterschiedliche Mischungen dieser Komponenten eingesetzt werden können, gegebenenfalls in Anwesenheit inerter Lösungsmittel, gegebenenfalls in Anwesenheit eines Katalysators aus der Gruppe der Säuren, bei Temperaturen zwischen 20 und 100 °C, innerhalb von 15 bis 180 Minuten, in molaren Mischungsverhältnissen von 60 zu 40 bis 40 zu 60, umgesetzt wird.

7. Verfahren zur Herstellung flammwidrig ausgerüsteter halogenfreier Polyolefin-Plastisole nach Anspruch 6, **dadurch gekennzeichnet, dass** die Polyolefin-Plastisole in einem dreistufigen Verfahren hergestellt werden, wobei in der ersten Prozessstufe das in grobstückiger Form vorliegende Polyolefinmaterial bei einer Temperatur wenigstens 10 °C über der Schmelztemperatur des Polyolefins mit 20 bis 60 Teilen des Dispersionsmittels, bezogen auf 100 Teile Polyolefin, homogenisiert wird, unter fortwährendem intensiven Mischen anschließend auf eine Temperatur von 5 bis 20 °C unter die Schmelztemperatur des Polyolefins abgekühlt wird und weitere 5 bis 70 Teile, bezogen auf 100 Teile Polyolefin, des Dispersionsmittels zugesetzt werden, wobei eine feinteilige Dispersion des Polyolefins in der Mischung der Dispersionsmittelkomponenten entsteht und
in einer dritten Verfahrensstufe die feinteilige Polyolefindispersion mit Partikeldurchmessern kleiner 50 µm bei einer Temperatur unter 60 °C unter schrittweiser Zugabe von weiteren 5 bis 40 Teilen Dispersionsmittelkomponenten, bezogen auf 100 Teile Polyolefin, einem für die reaktive Gelierung geeigneten Initiator-System sowie gegebenenfalls weiteren Additiven, wie Stabilisatoren, Farb- und Füllstoffen, zu einer pastenförmigen Masse mit dem gewünschten Fließverhalten verarbeitet wird, wobei die Zugabe und Einarbeitung des mindestens einen phosphorhaltigen Reaktivverdünners nach Formel I in einer der drei Stufen erfolgt.

8. Verfahren zur Herstellung flammwidrig ausgerüsteter halogenfreier Polyolefin-Plastisole nach mindestens einem der Ansprüche 6 bis 7, **dadurch gekennzeichnet, dass** die Zugabe und Einarbeitung des mindestens einen phosphorhaltigen Reaktivverdünners oder eines Gemisches verschiedener phosphorhaltiger Reaktivverdünner in der dritten Verfahrensstufe vor Zugabe des letzten Anteils der Dispersionsmittelmittelkomponenten erfolgt.

9. Verfahren zur Herstellung flammwidrig ausgerüsteter halogenfreier Polyolefin-Plastisole nach mindestens einem der Ansprüche 6 bis 8, **dadurch gekennzeichnet, dass** R₅ in der Struktur II eine geradlinige oder verzweigte Alkyl-, Cycloalkyl-, Aryl- oder Alkylarylgruppe mit 2 bis 6 C-Atomen bedeutet.

10. Verfahren zur Herstellung flammwidrig ausgerüsteter halogenfreier Polyolefin-Plastisole nach mindestens einem der Ansprüche 6 bis 9, **dadurch gekennzeichnet, dass** zur Synthese der phosphorhaltigen Reaktivverdünner 2-Methyl-2,5-dioxo-1-oxa-2-phospholan verwendet wird.

11. Verfahren zur Herstellung flammwidrig ausgerüsteter halogenfreier Polyolefin-Plastisole nach mindestens einem der Ansprüche 6 bis 10, **dadurch gekennzeichnet, dass** in der Struktur III R₈ eine geradlinige oder verzweigte Alkylengruppe mit 2 bis 6 C-Atomen bedeutet.

12. Verfahren zur Herstellung flammwidrig ausgerüsteter halogenfreier Polyolefin-Plastisole nach mindestens einem der Ansprüche 6 bis 11, **dadurch gekennzeichnet, dass** zur Synthese der phosphorhaltigen Reaktivverdünner 2-Hydroxyethylacrylat, 2-Hydroxyethylmethacrylat, 3-Hydroxypropylacrylat, 3-Hydroxypropylmethacrylat, 1,4-Butandiolmonoacrylat, 3-Methyl-2-buten-1-ol oder tert. Butanol eingesetzt werden.

13. Verfahren zur Herstellung flammwidrig ausgerüsteter halogenfreier Polyolefin-Plastisole nach einem oder mehreren der Ansprüche 6 bis 12, **dadurch gekennzeichnet, dass** die phosphorhaltigen Reaktivverdünner bei Temperaturen zwischen 40 und 70 °C hergestellt werden.

14. Verfahren zur Herstellung flammwidrig ausgerüsteter halogenfreier Polyolefin-Plastisole nach einem oder mehreren der Ansprüche 6 bis 13, **dadurch gekennzeichnet, dass** die Reaktanten nach Formel II und III bzw. die verzweigten Alkohole in molaren Mischungsverhältnissen von 55 zu 45 bis 45 zu 55 umgesetzt werden.

15. Verfahren zur Herstellung flammwidrig ausgerüsteter halogenfreier Polyolefin-Plastisole nach mindestens einem der Ansprüche 6 bis 14, **dadurch gekennzeichnet, dass** die phosphorhaltigen Reaktivverdünner oder Mischungen dieser, den halogenfreien Polyolefin-Plastisolen in einer Menge von 1 bis 50 Gewichts-% zugesetzt werden, sodass der Phosphorgehalt der Plastisole 0,1 bis 5 Gewichts-% beträgt.

16. Verfahren zur Herstellung flammwidrig ausgerüsteter halogenfreier Polyolefin-Plastisole nach mindestens einem der Ansprüche 6 bis 15, **dadurch gekennzeichnet, dass** die phosphorhaltigen Reaktivverdünner oder Mischungen dieser, den halogenfreien Polyolefin-Plastisolen, in einer Menge von 3 bis 20 Gewichts-% zugesetzt werden, sodass der Phosphorgehalt der Plastisole vorzugsweise 0,3 bis 2 Gewichts-% beträgt.

17. Verwendung der flammwidrig ausgerüsteten halogenfreien Polyolefin-Plastisole nach einem oder mehreren der Ansprüche 1 bis 16 zur Herstellung von Folien und Beschichtungen.
